# EUROPEAN PATENT SPECIFICATION

(11) **EP 3 368 490 B1**
(45) Date of publication and mention of the grant of the patent: **18.12.2019**
(21) Application number: 16798586.0
(22) Date of filing: 26.10.2016
(51) Int. Cl.: C03C 8/02, C03C 8/14, C03C 8/18, C03C 14/00, F24H 1/00, F24H 9/00

(54) **HEAT EXCHANGER AND METHOD FOR ITS MANUFACTURE**
WÄRMETAUCHER UND VERFAHREN ZU SEINER HERSTELLUNG
ÉCHANGEUR DE CHALEUR ET SON PROCÉDÉ DE FABRICATION

(30) Priority: 28.10.2015 DE 102015118449
(43) Date of publication of application: 05.09.2018
(73) Proprietor: Remeha B.V., 7332 BD Apeldoorn (NL)
(72) Inventor: KÜHN, Wolfgang, 08315 Lauter-Bernsbach (DE); BRETSCHNEIDER, Annett, 08297 Zwönitz (DE); IN DEN HAAK, Wilhelmus Leonardus, 8016 Ma Zwolle (NL); KLEIN, Remko Harmen, 7431 RC Diepenveen (NL)
(74) Representative: V.O.
(86) International application number: PCT/NL2016/050745
(87) International publication number: WO 2017/074185

(56) References cited:
- EP-A2- 0 618 410
- WO-A2-2010/037719
- DD-A5- 285 121
- DE-A1- 2 833 649
- DE-A1- 3 545 011
- DE-A1-102013 108 428
- DE-A1-102014 100 568
- FR-A1- 2 289 627
- US-A- 2 425 032
- US-A1- 2004 077 477
- US-A1- 2015 219 039

## Description

### Field

The invention relates to the protection heat exchangers for the heating of liquids, in particular water.

### Background

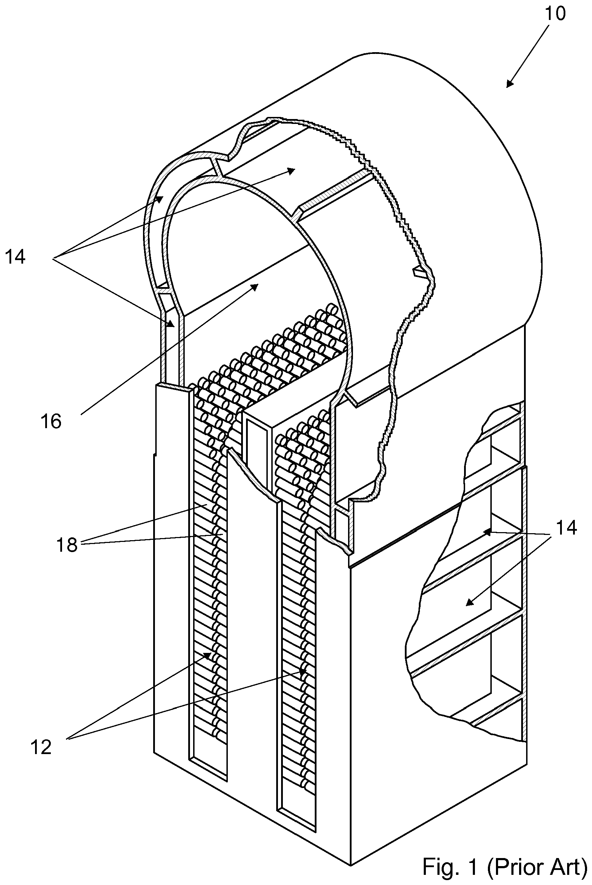

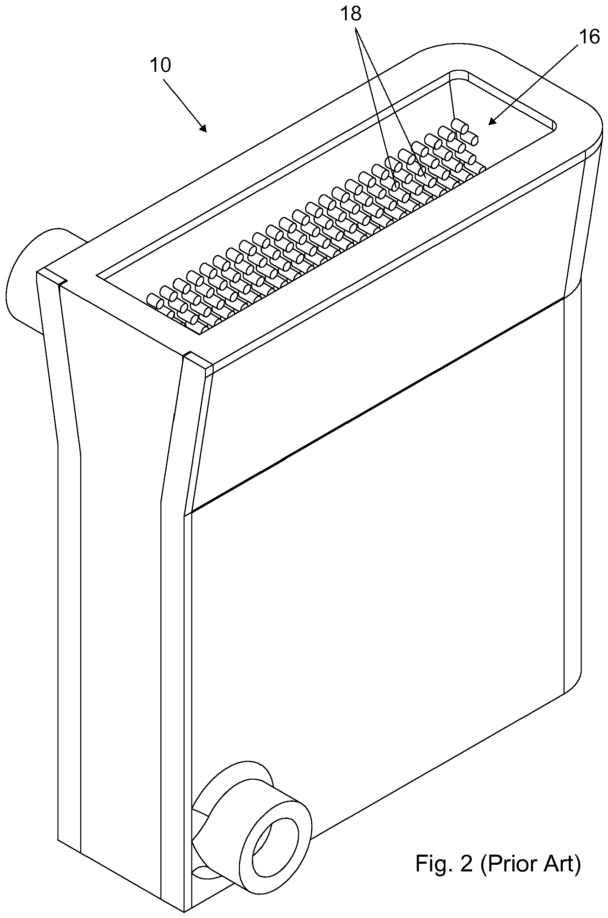

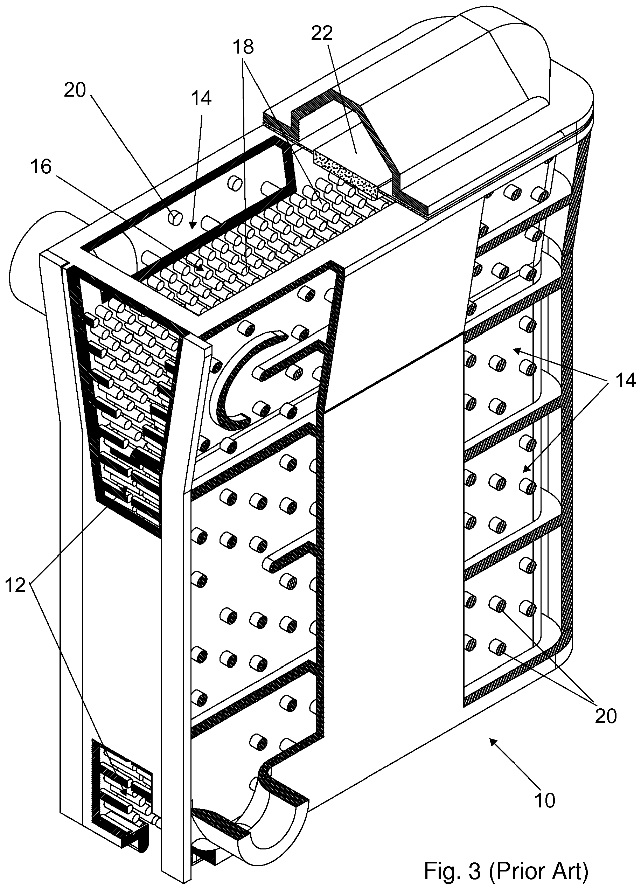

Heat exchangers of aluminium are known. An example of a known heat exchanger is described in EP-0 889 292 A2 and shown in figure 1 thereof which is also figure 1 of the present application. The aluminium heat exchanger 10 for a central heating installation, is manufactured in a casting process, e.g. a sandcasting process. The heat exchanger 10 includes at least one flue gas draft 12 and water channels 14 which are integrally formed during the casting procedure, for example by using a sand mold and sand cores. Optionally, the aluminium walls of the heat exchanger also bound a burner chamber 16 in which a burner may be accommodated. Alternatively, a burner 22 may be connected to a side the heat exchanger, e.g. the top side, so that the flames produced by the burner extend into a burner chamber which may be formed by an upstream part of the at least one flue gas draft 12. An example of such a configuration is shown in figures 1 and 2 of EP 1722172 A2 which are figures 2 and 3 of the present application. Another example of an aluminium heat exchanger for a central heating installation is disclosed in WO-A-2010037719. The water channels are preferably arranged in such a manner that the aluminium walls that bound the at least one flue gas draft and the burner chamber are cooled by the water present in the water channels. In use, very hot flue gasses directly contact the aluminium heat exchanger walls in the at least one flue gas draft of the heat exchanger. The walls of the aluminium heat exchanger may be provided with a surface area enlarging structures, such as fins of pins 18 that protrude in the at least one flue gas draft. Optionally, the walls may also be provided with surface area enlarging pins and or fins 20 that extend into the water channels 14. Thus, a very direct transfer of heat from the flue gas via the aluminium walls to the water in the water channel may be effected. Because the aluminium heat exchangers may be manufactured as a monocast, manufacturing costs may be relatively low.

Aluminium is a suitable material because it has a very good heat conductivity properties. The surface of aluminium will automatically be covered with a thin layer of aluminium oxide which is vacuum-tight and prevents a further corrosion. Advantageously, the material of a heat exchanger comprises an alloy that in addition to aluminium also contains silicon and magnesium. The silicon here serves for better castability of the liquid alloy. This is of importance for being able to cast fine structures such as the fins and/or pins that provide a better heat transfer as a consequence of the enlarged heat transfer surface area. Magnesium, in turn, is added to the alloy to increase mechanical hardness.

### Summary

When the known heat exchanger is used, fuel is combusted and the flue draft gases which are produced may contain combustion products are formed which are detrimental to the aluminium. Especially for heat exchangers with very high efficiency, the flue draft gases are cooled down to such an extend that condensation of water occurs within the heat exchanger. In both gas and oil, which are the common fuels used for combustion, sulfur is contained. During the burning process, this sulfur reacts with oxygen to form sulfur dioxide. Additionally NOₓ is formed in the burning process. During the subsequent condensation, in which water is formed, the water reacts with the sulfur dioxide and the NOₓ so that and sulfurous acid and Nitric acid are formed. Upon evaporation of the condensate, the concentration of the acids increases so that the acids may react with the amphoteric aluminium to form deposits. The surface of the heat exchanger is affected by these kind of deposits which may impede heat transmission and which may lower the efficiency of the heating system. Additionally, the deposits may clog the flue gas drafts. Finally, the life of the system is decisively reduced.

It is an object of the invention to alleviate the problem mentioned above.

To that end, the invention provides a heat exchanger for a central heating installation according to claim 1.

Additionally, the invention provides a method for manufacturing an aluminium heat exchanger for a central heating installation according to claim 3.

Tests with a wide range of organic coating materials have shown that utilization of coatings comprising organic materials is not possible as the high temperature that arises upon the combustion of oil, gas, etc., destroys the organic coating in less than no time.

The utilization of known inorganic coating materials, on the other hand, led to glass ceramic coating materials in the form of enamels with a small softening interval. Low-melting enamels are required because aluminium has a low melting point and the temperature which is required for the application of the enamel on the aluminium surface should be lower than the melting temperature of the aluminium. In fact, the softening interval of known low-melting enamels is so small that these enamels do not exhibit any decisive resistance to high thermal and mechanical loads which are caused by quick temperature changes due to the hot flue gases and even flames that intermittently contact the coated surface due to switching on and off of the burner.

The heat exchanger according to the invention has an improved corrosion protection and reduced deposit formation by virtue of the enamel coating that is applied on at least a part of the heat exchanger body that bounds the flue gas draft , whereby the enamel coating is a low melting enamel with good heat conductive properties that is resistant to high thermal and mechanical loads.

The percentages mentioned in the claims, are percentages by weight. The enamel coating obtained with this slurry is optimal for its purpose, i.e. coating aluminium containing substrates that are subjected to high temperature and mechanical loads. This is due to the interaction of the constituents, which make their contributions by virtue of their properties. Thus, the oxidic light metal compound increases the heat resistance by virtue of its melting point of 2,050 °C. The mixture of boric acid, potassium hydroxide solution and water glass replaces the usual antisettling agent clay, whose decomposition is precluded by reason of the low firing temperature, and increases the viscosity of the enamel slurry, so that, for example, spraying of the enamel is made possible. The addition of calcium formate also influences, in the interaction with the potassium ions available, the viscosity of the enamel slurry, so that applying the enamel to the substrate in the draining procedure is made possible. The addition of alcohol improves the stability of the admixture of high-grade steel powder in the enamel slurry, in particular in that larger accumulations of the metal on the surface of the enamel slurry are avoided. The admixture of the high-grade steel powder brings about the improvement of the heat conductivity and hence the reduction of the mechanical load by reduction of the difference of the heat expansion coefficients of the substrate and the enamel.

The enamel frit itself is manufactured in a known manner, in that, for example, different raw materials such as quartz, borax, feldspar, soda, saltpeter, cryolite, and others where applicable, are fused together at temperatures of up to 1,400 °C over a prolonged period of time in a rotary furnace or a melter over an appropriate period of time, thereupon the molten mixture is quenched in water or via water-cooled rollers and finally ground in a drum mill.

The coating which will be obtained with the enamel powder has a larger softening interval as a consequence of which the resistance against high thermal and mechanical loads is very good. Additionally, the coating also has excellent heat conductive properties which is of vital importance in the application in heat exchangers.

It should be noted that DE 10 2013 108 428 A1 and DE 10 2014 100 568 A1 disclose a coating powder that includes 100 parts glass powder, 10-21 parts of light metal oxide powder and 1-5 parts of heavy metal powder. Examples of light metal which are mentioned are Al, Ti and Mg. Examples of heavy metals which are mentioned are high grade steel, like X5CrNi18-10 and X5CrNiMo 17-12-2. This known coating powder is used to form an enamel coating on the inside of exhaust channels in a cylinder head or in a turbo compressor. The known enamel coating provides a protection against thermal loads and chemical aggressive gaseous media. US2015/0219039 relates to the coating of a cylinder bore of an engine with an enamel coating. In figure 3 of that publication and paragraph [0050] it is disclosed that the cylinder bores can be flooded with enamel slurry. After the flooding, an enamel firing operation and a heat treatment may be performed that proceed in the same temperature/time window, such that this firing and quenching operation thus gives rise to a cylinder block having an increased mechanical strength and also a cylinder bore with good thermal insulation and good wear and corrosion resistance (see [0054]). DE 28 33 649 relates to an exhaust of a motor car that is coated with a special coating that contains inter alia a high grade steel powder and aluminium oxide. After application of the slurry, a drying operation is performed and after that a heating operation of 10-15 minutes at a temperature of between 800°C - 900°C.

In an embodiment, the enamel powder may contain, besides the enamel frit, 8 to 15 % of powder-form oxidic light metal compound and 8 to 20 % of high-grade steel powder. Good results have been obtained with an embodiment in which the oxidic light metal compound was corundum. The high-grade steel powder is preferably uncoated.

In an embodiment, the mixture in the slurry may contain, apart from enamel powder, 1 to 10 % of alcohol, 0.1 to 2.5 % of calcium formate, 2 to 6 % of boric acid, 2 to 6 % of potassium hydroxide solution, 2 to 6 % of water glass.

Preferably, the alcohol is a monovalent alcohol.

These embodiments provide an enamel coating that meets the requirements for use in the fierce environment existing in the flue gas drafts of an aluminium heat exchanger and that is resistant to the high temperature and mechanical loads existing in such environment.

The invention also provides a method according to claim 3. With the method according to claim 3, only the parts of the heat exchanger that are exposed to the aggressive constituents in the flue gases and the condensate may be covered which beneficial in view of costs.

In an embodiment, the aluminium surfaces of the heat exchanger body that have to be coated may be subjected to a pretreatment before the at least partially covering of the flue gas draft with an enamel slurry, wherein the pretreatment comprises at least partially removing the aluminium oxide layer from the surfaces to be coated.

Thus, a better bonding between the enamel coating and the aluminium walls of the heat exchanger will be obtained.

In an embodiment, the pretreatment may include a chemical treatment including subjecting the surface to an alkaline detergent followed by neutralization with diluted saltpetre.

In an alternative embodiment, the pretreatment may include an annealing process followed by a cooling down. Due to the different thermal expansion coefficients of aluminium and aluminium oxide, the thin layer of aluminium oxide will be removed.

In an embodiment, the method may include:
- blowing dry the flue gas draft with a blow dryer after the draining and before the firing.

In order to obtain a durable coating, the firing may include heating the heat exchanger body at a temperature in the range of 510 °C to 610 °C for at least 60 minutes. Depending on the size of the heat exchanger this time may be longer. For a 28 kW heat exchanger, the firing time may be approximately 90 minutes.

The manufacture of an enamel slurry is advantageously implemented in that calcium formate is provided as saturated solution in water and is added in small portions until the intended viscosity is reached.

Preferably, the high-grade steel powder has a grain size < 50 µm.

For a casted aluminium heat exchanger with narrow flue gas drafts and surface enlarging pins and fins, the method described above including filling the flue gas drafts with slurry and draining the flue gas drafts is most practical to guarantee a good coverage of all parts of the flue gas draft with the slurry. However, the invention does not exclude other means for applying the slurry according to the invention on a substrate surface. For example, the application of the enamel slurry to the substrate, or the heat exchanger body, may be done by pouring on, or, alternatively spraying. After enamel slurry has been applied, it is dried and then fired. Temperature and duration of the firing depend on the volume of the substrate object. In this regard, it has proven advantageous to use for this an oven with air circulation, so as to utilize the convective flow of heat as well as possible.

In the following, the enameling of a heat exchanger is explained in more detail by way of exemplary embodiment.

First, the heat exchanger body consisting of a silicon- and magnesium-containing aluminium alloy is subjected to an annealing process during up to 60 minutes in a gas-heated oven at at least 350 °C in order to remove any adherent dirt and grease residues and to break up the aluminium oxide layer, in order to be able to apply the enamel slurry to the desired surfaces of the heat exchanger body. The enamel slurry is manufactured in a porcelain-walled mill, which is filled with porcelain balls for up to about 70 %. In the mill, 500 kg of suitable enamel frit as well as 50 kg of corundum, 50 kg of high-grade steel powder, 3 liters of methyl alcohol, 1 kg of calcium formate, 10 kg of boric acid, 20 kg of potassium hydroxide solution, 30 kg of water glass and 250 liters of water are added, mixed and ground, until the enamel slurry has a density of 1.85 gcm⁻³ and a grinding fineness, measured with a special sieve, of 3 parts according to Pemco. The finished enamel slurry is applied to at least a part of the heat exchanger surfaces which are influenced by flue gases and condensate during operation of the heat exchanger, for instance by pouring the enamel slurry on these surfaces or spraying it on by means of a spray gun. After run-off of the excess enamel slurry, the enameling of the heat exchanger is completed in that the adherent enamel slurry without prior drying is fired in a gas furnace for 90 minutes at 550 to 610 °C.

## Claims

1. A heat exchanger for a central heating installation including:
- a casted aluminium heat exchanger body bounding at least one flue gas draft with surface enlarging pins or fins and bounding at least one water channel,
**characterized by**
- an enamel coating applied on at least a part of the heat exchanger body that bounds the flue gas draft, wherein the enamel coating is formed from an enamel slurry comprising an enamel powder comprising an enamel frit admixed with 8 to 15 wt% of a powder-form oxidic light metal compound and 8 to 20 wt% of a high-grade steel powder.

2. The heat exchanger according to claim 1, wherein the oxidic light metal compound is corundum.

3. A method for manufacturing an aluminium heat exchanger for a central heating installation, the method including:
- providing a casted aluminium heat exchanger body bounding at least one flue gas draft with surface enlarging pins or fins and bounding at least one water channel,
**characterized by**
- at least partially filling the flue gas draft with an enamel slurry comprising an amount of water and a mixture, wherein the mixture includes:
- an enamel powder comprising an enamel frit admixed with 8 - 15 wt% of a powder-form oxidic light metal compound and 8 - 20 wt% of a high-grade steel powder; and
- up to 10 wt% of alcohol, up to 2.5 wt% of calcium formate, up to 6 wt% of boric acid, up to 6 wt% of potassium hydroxide solution, and up to 6 wt% of water glass;
- draining the slurry from the flue gas draft;
- firing the heat exchanger body so as to form the enamel coating.

4. The method according to claim 3, wherein the aluminium surfaces of the heat exchanger body that have to be coated are subjected to a pretreatment before the at least partially filling of the flue gas draft with an enamel slurry, wherein the pretreatment comprises at least partially removing the aluminium oxide layer from the surfaces to be coated.

5. The method according to claim 4, wherein the pretreatment includes a chemical treatment including subjecting the surface to an alkaline detergent followed by neutralization with diluted saltpetre.

6. The method according to claim 4, wherein the pretreatment includes an annealing process followed by a cooling down.

7. The method according to any one of claims 3-6, including:
- blowing dry the flue gas draft with a blow dryer after the draining and before the firing.

8. The method according to any one of claims 3-7, wherein the firing includes heating the heat exchanger body at a temperature in the range of 510 °C to 610 °C for at least 60 minutes.

9. The method according to claim 3, wherein the high-grade steel powder is uncoated.

10. The method of claim 3 or 9, wherein the amount of water is such that the slurry has a density of substantially 1.85 g/cm³.

11. The method according to claim 3, 9 or 10, wherein the mixture contains, apart from the enamel powder, 1 to 10 % of alcohol, 0.1 to 2.5 % of calcium formate, 2 to 6 % of boric acid, 2 to 6 % of potassium hydroxide solution, 2 to 6 % of water glass, wherein all percentages are percentages by weight.

12. The method according to claim 3, 9, 10 or 11, wherein the alcohol is a monovalent alcohol.

## Patentansprüche

1. Wärmetauscher für eine Zentralheizungsanlage mit:
- einem Wärmetauscherkörper aus Aluminiumguss, der wenigstens einen Rauchgaszug mit oberflächenvergrößernden Stiften oder Rippen begrenzt und wenigstens einen Wasserkanal begrenzt,
**gekennzeichnet durch**
- eine Emaillebeschichtung, die auf wenigstens einen Teil des Wärmetauscherkörpers aufgebracht ist, der den Rauchgaszug begrenzt, wobei die Emaillebeschichtung aus einem Emailleschlick gebildet ist, der ein Emaillepulver umfasst, das eine Emaillefritte umfasst, die mit 8 bis 15 Gew.-% einer pulverförmigen oxidischen Leichtmetallverbindung und 8 bis 20 Gew.-% eines Edelstahlpulvers gemischt ist.

2. Wärmetauscher nach Anspruch 1, wobei die oxidische Leichtmetallverbindung Korund ist.

3. Verfahren zur Herstellung eines Wärmetauschers aus Aluminium für eine Zentralheizungsanlage, wobei das Verfahren Folgendes umfasst:
- Bereitstellen eines Wärmetauscherkörpers aus Aluminiumguss, der wenigstens einen Rauchgaszug mit oberflächenvergrößernden Stiften oder Rippen begrenzt und wenigstens einen Wasserkanal begrenzt,
**gekennzeichnet durch**
- wenigstens teilweises Füllen des Rauchgaszuges mit einem Emailleschlick, der eine Menge an Wasser und ein Gemisch umfasst, wobei das Gemisch Folgendes umfasst:
- ein Emaillepulver, umfassend eine Emaillefritte, die mit 8 bis 15 Gew.-% einer pulverförmigen oxidischen Leichtmetallverbindung und 8 bis 20 Gew.-% eines Edelstahlpulvers gemischt ist; und
- bis zu 10 Gew.-% Alkohol, bis zu 2,5 Gew.-% Calciumformiat, bis zu 6 Gew.-% Borsäure, bis zu 6 Gew.-% Kaliumhydroxidlösung und bis zu 6 Gew.-% Wasserglas;
- Ablassen des Schlicks aus dem Rauchgaszug;
- Brennen des Wärmetauscherkörpers, um die Emaillebeschichtung zu bilden.

4. Verfahren nach Anspruch 3, **dadurch gekennzeichnet, dass** die zu beschichtenden Aluminiumoberflächen des Wärmetauscherkörpers vor dem wenigstens teilweisen Füllen des Rauchgaszuges mit einem Emailleschlick einer Vorbehandlung unterzogen werden, wobei die Vorbehandlung wenigstens teilweises Entfernen der Aluminiumoxidschicht von den zu beschichtenden Oberflächen umfasst.

5. Verfahren nach Anspruch 4, wobei die Vorbehandlung eine chemische Behandlung einschließt, bei der die Oberfläche einem alkalischen Detergens ausgesetzt wird, gefolgt von einer Neutralisierung mit verdünntem Salpeter.

6. Verfahren nach Anspruch 4, wobei die Vorbehandlung einen Glühprozess mit anschließender Abkühlung umfasst.

7. Verfahren nach einem der Ansprüche 3 bis 6, umfassend:
- Trockenblasen von Rauchgaszug nach dem Ablassen und vor dem Brennen mit einem Föhn.

8. Verfahren nach einem der Ansprüche 3 bis 7, wobei das Brennen das Erhitzen des Wärmetauscherkörpers auf eine Temperatur im Bereich von 510 °C bis 610 °C für wenigstens 60 Minuten umfasst.

9. Verfahren nach Anspruch 3, wobei das Edelstahlpulver unbeschichtet ist.

10. Verfahren nach Anspruch 3 oder 9, wobei die Menge an Wasser derart ist, dass der Schlick eine Dichte von im Wesentlichen 1,85 g/cm³ aufweist.

11. Verfahren nach Anspruch 3, 9 oder 10, wobei das Gemisch außer dem Emaillepulver 1 bis 10 % Alkohol, 0,1 bis 2,5 % Calciumformiat, 2 bis 6 % Borsäure, 2 bis 6 % Kalilauge, 2 bis 6 % Wasserglas enthält, wobei alle Prozentangaben Gewichtsprozente sind.

12. Verfahren nach Anspruch 3, 9, 10 oder 11, wobei der Alkohol ein einwertiger Alkohol ist.

## Revendications

1. Echangeur de chaleur destiné à une installation de chauffage central, comprenant :
- un corps d'échangeur de chaleur en aluminium coulé, délimitant au moins un conduit de tirage de gaz de fumée, avec des broches ou des ailettes augmentant la surface, et délimitant au moins une conduite d'eau,
**caractérisé par**
- un revêtement d'émail appliqué sur au moins une partie du corps de l'échangeur de chaleur qui délimite le conduit de tirage de gaz de fumée, le revêtement d'émail étant formé à partir d'une barbotine d'émail composée d'une poudre d'émail comportant de la fritte d'émail mélangée avec 8 à 15 % en poids d'un composé métallique oxydique léger sous forme de poudre et 8 à 20 % en poids d'une poudre d'acier fin.

2. Echangeur de chaleur selon la revendication 1, dans lequel le composé métallique oxydique léger est du corindon.

3. Procédé de fabrication d'un échangeur de chaleur en aluminium destiné à une installation de chauffage central, le procédé comprenant :
- la fourniture d'un corps d'échangeur de chaleur en aluminium coulé, délimitant au moins un conduit de tirage de gaz de fumée, avec des broches ou des ailettes augmentant la surface, et délimitant au moins une conduite d'eau,
**caractérisé par**
- le remplissage au moins partiel du conduit de tirage de gaz de fumée avec une barbotine d'émail composée d'une quantité d'eau et d'un mélange, ledit mélange comprenant :
- une poudre d'émail comportant de la fritte d'émail mélangée avec 8 à 15 % en poids d'un composé métallique oxydique léger sous forme de poudre et 8 à 20 % en poids d'une poudre d'acier fin ; et
- jusqu'à 10 % en poids d'alcool, jusqu'à 2,5 % en poids de formiate de calcium, jusqu'à 6 % en poids d'acide borique, jusqu'à 6 % en poids d'une solution d'hydroxyde de potassium et jusqu'à 6 % en poids de verre soluble ;
- l'évacuation de la barbotine du conduit de tirage de gaz de fumée ;
- la cuisson du corps de l'échangeur de chaleur, de manière à former le revêtement d'émail.

4. Procédé selon la revendication 3, selon lequel les surfaces en aluminium du corps de l'échangeur de chaleur qui doivent être revêtues sont soumises à un prétraitement, avant le remplissage au moins partiel du conduit de tirage de gaz de fumée avec une barbotine d'émail, ledit prétraitement comprenant le retrait au moins partiel de la couche d'alumine des surfaces devant recevoir le revêtement.

5. Procédé selon la revendication 4, selon lequel le prétraitement comprend un traitement chimique qui consiste à appliquer un détergent alcalin sur la surface, puis à effecteur une neutralisation avec du salpêtre dilué.

6. Procédé selon la revendication 4, selon lequel le prétraitement comprend un processus de recuit suivi d'un refroidissement.

7. Procédé selon l'une quelconque des revendications 3 à 6, comprenant :
- le séchage par soufflage du conduit de tirage de gaz de fumée, à l'aide d'un séchoir soufflant, après l'évacuation et avant le recuit.

8. Procédé selon l'une quelconque des revendications 3 à 7, selon lequel le recuit comprend le chauffage du corps de l'échangeur de chaleur, à une température comprise dans la plage allant de 510 °C à 610 °C, pendant au moins 60 minutes.

9. Procédé selon la revendication 3, selon lequel la poudre d'acier fin est non enrobée.

10. Procédé selon la revendication 3 ou 9, dans lequel la quantité d'eau est telle que la barbotine présente une densité qui est sensiblement de 1,85 g/cm³.

11. Procédé selon la revendication 3, 9 ou 10, selon lequel le mélange contient, en dehors de la poudre d'émail, de 1 à 10 % d'alcool, de 0,1 à 2,5 % de formiate de calcium, de 2 à 6 % d'acide borique, de 2 à 6 % de solution d'hydroxyde de potassium et de 2 à 6 % de verre soluble, sachant que tous les pourcentages sont des pourcentages en poids.

12. Procédé selon la revendication 3, 9, 10 ou 11, selon lequel l'alcool est un alcool monovalent.
